# EUROPÄISCHE PATENTANMELDUNG

(11) **EP 4 678 262 A1**
(43) Veröffentlichungstag der Anmeldung: **14.01.2026**
(21) Anmeldenummer: 25188198.3
(22) Anmeldetag: 08.07.2025
(51) Int. Cl.: B01D 29/11

(54) **FILTERELEMENT UND FILTERSYSTEM**

(30) Priorität: 08.07.2024 DE 102024119374
(71) Anmelder: MANN+HUMMEL GmbH, 71636 Ludwigsburg (DE)
(72) Erfinder: THALMANN, Christian, 71636 Ludwigsburg (DE); VALOUSEK, Tomá, 71636 Ludwigsburg (DE); MÄRTZ, Mike, 71636 Ludwigsburg (DE)
(74) Vertreter: Mann + Hummel Intellectual Property

(57) **Zusammenfassung**

Die Erfindung betrifft ein Filterelement (10) für ein Fluid, insbesondere für eine Flüssigkeit, insbesondere Öl oder Kraftstoff, zum Einbau in ein Gehäuse (110) eines Filtersystems (100), mit wenigstens einem ersten Gehäuseteil (112), einem zweiten Gehäuseteil (114) und einem Filterkopf (116), wenigstens umfassend einen Filtermediumkörper (12), welcher wenigstens an einer ersten Stirnseite (16) eine erste Endscheibe (20) aufweist, und wenigstens ein Verbindungelement (32) zum Verbinden des Filterelements (10) mit wenigstens einem Verbindungsgegenelement (120) des zweiten Gehäuseteils (114) aufweist. Dabei ist das wenigstens eine Verbindungselement (32) an der ersten Endscheibe (20) angeordnet und erstreckt sich von der ersten Endscheibe (20) in einer Längsrichtung (80) weg.

Die Erfindung betrifft ferner ein Filtersystem (100).

## Beschreibung

### Technisches Gebiet

Die Erfindung betrifft ein Filterelement für ein Fluid, insbesondere für eine Flüssigkeit, insbesondere Öl oder Kraftstoff, und ein Filtersystem für ein Fluid, insbesondere für eine Flüssigkeit, insbesondere Öl oder Kraftstoff.

### Stand der Technik

Filtersysteme für Fluide, insbesondere für Flüssigkeiten, insbesondere Öl oder Kraftstoff, bei denen Rastverbindungen zum Montieren von einzelnen Komponenten eingesetzt werden, sind bekannt.

WO 23132238 A1 offenbart beispielsweise ein Filtersystem, bei dem ein Fluidbehälter, welcher einen Fluideinlass und einen Fluidauslass aufweist, mit einem Flansch eines Filtergehäuses über Schnapphaken verbunden ist.

In US 2017197160 A1 ist beispielsweise ein Filtersystem mit einem Verschlusselement beschrieben, welches einen Fluidauslass blockiert, wenn das Filterelement aus dem Filtergehäuse entnommen wird. Das Verschlusselement ist mit einem Anschlussstutzen verklipst.

### Offenbarung der Erfindung

Eine Aufgabe der Erfindung ist es, ein Filterelement für ein Fluid, insbesondere für eine Flüssigkeit, insbesondere Öl oder Kraftstoff, zu schaffen, bei dem eine einfache und sichere Entnahme aus dem Filtergehäuse möglich ist.

Eine weitere Aufgabe der Erfindung ist es, ein Filtersystem für ein Fluid, insbesondere für eine Flüssigkeit, insbesondere Öl oder Kraftstoff, mit einem solchen Filterelement zu schaffen.

Die vorgenannte Aufgabe wird nach einem Aspekt der Erfindung gelöst mit einem Filterelement für ein Fluid, insbesondere für eine Flüssigkeit, insbesondere Öl oder Kraftstoff, zum Einbau in ein Gehäuse eines Filtersystems mit wenigstens einem ersten Gehäuseteil, einem zweiten Gehäuseteil und einem Filterkopf, wenigstens umfassend einen Filtermediumkörper, welcher wenigstens an einer ersten Stirnseite eine erste Endscheibe aufweist, und wenigstens ein Verbindungelement zum Verbinden des Filterelements mit wenigstens einem Verbindungsgegenelement des zweiten Gehäuseteils aufweist, wobei das wenigstens eine Verbindungselement an der ersten Endscheibe angeordnet ist und sich von der ersten Endscheibe in einer Längsrichtung weg erstreckt.

Die weitere Aufgabe wird nach einem weiteren Aspekt der Erfindung gelöst mit einem Filtersystem für ein Fluid, insbesondere für eine Flüssigkeit, insbesondere Öl oder Kraftstoff, mit einem Gehäuse mit einem Fluideinlass und einem Fluidauslass und einem in dem Gehäuse angeordneten Filterelement, wobei das Gehäuse wenigstens ein erstes Gehäuseteil, ein zweites Gehäuseteil und einen Filterkopf umfasst, wobei das erste Gehäuseteil mit dem Filterkopf verbunden ist und wobei das zweite Gehäuseteil an einem Rücksprung in dem Filterkopf hängend angeordnet ist, wobei das Filterelement einen Filtermediumkörper, welcher wenigstens an einer ersten Stirnseite eine erste Endscheibe aufweist, und wenigstens ein Verbindungselement zum Verbinden des Filterelements mit einem Verbindungsgegenelement des zweiten Gehäuseteils umfasst.

Günstige Ausgestaltungen und Vorteile der Erfindung ergeben sich aus den weiteren Ansprüchen, der Beschreibung und der Zeichnung.

Nach einem Aspekt der Erfindung wird ein Filterelement für ein Fluid, insbesondere für eine Flüssigkeit, insbesondere Öl oder Kraftstoff, zum Einbau in ein Gehäuse eines Filtersystems mit wenigstens einem ersten Gehäuseteil, einem zweiten Gehäuseteil und einem Filterkopf vorgeschlagen, wenigstens umfassend einen Filtermediumkörper, welcher wenigstens an einer ersten Stirnseite eine erste Endscheibe aufweist, und wenigstens ein Verbindungelement zum Verbinden des Filterelements mit wenigstens einem Verbindungsgegenelement des zweiten Gehäuseteils aufweist. Dabei ist das wenigstens eine Verbindungselement an der ersten Endscheibe angeordnet und erstreckt sich von der ersten Endscheibe in einer Längsrichtung weg.

Das Gehäuse des Filtersystems umfasst den Filterkopf, ein erstes Gehäuseteil und ein zweites Gehäuseteil. Das erste Gehäuseteil ist in den Filterkopf geschraubt und abgedichtet. Das zweite Gehäuseteil ist an einem Rücksprung des Filterkopfs eingehängt. Das Gehäuse kann über das erste Gehäuseteil geöffnet werden.

Eine erste, untere, Endscheibe des Filterelements kann mit einem Fluidauslass des zweiten Gehäuseteils dicht verbunden werden. Der Fluidauslass des zweiten Gehäuseteils führt direkt in einen Fluidtank.

Das Filterelement kann auf diese Weise über wenigstens ein Verbindungselement und ein Verbindungsgegenelement mit dem zweiten Gehäuseteil des Filtersystems sicher verbunden werden. Das Verbindungselement kann beispielsweise an der ersten Endscheibe angeordnet sein, während das Verbindungsgegenelement an einem Auslassstutzen des zweiten Gehäuseteils angeordnet sein kann. Das gefilterte Fluid kann so durch eine zentrale Öffnung der Endscheibe direkt in den Auslassstutzen des Fluidauslasses des zweiten Gehäuseteils fließen.

Das Filterelement kann insbesondere als hohlzylinderförmiges Rundfilter ausgebildet sein, welches von einer radialen Außenseite auf eine Innenseite von dem Fluid durchströmt wird.

Vorteilhaft können auch andere geometrische Formen eines Filterelements eingesetzt werden.

Bei einem Tausch des Filterelements kann das zweite Gehäuseteil zusammen mit dem Filterelement aus dem Filterkopf entnommen werden. Dabei verbleibt eventuell zwischen Filterelement und Gehäusewand verbliebenes Rohfluid in dem zweiten Gehäuseteil. Danach kann das Filterelement durch Lösen von Verbindungselement und Verbindungsgegenelement aus dem zweiten Gehäuseteil entnommen werden.

Vorteilhaft kann auf diese Weise eine Wartung des Filtersystems einfacher durchgeführt werden. Das im zweiten Gehäuseteil verbliebene Rohfluid auf der Außenseite des Filtermediumkörpers gelangt nicht in den Fluidtank, wenn das Filterelement getauscht wird.

Gemäß einer günstigen Ausgestaltung des Filterelements kann die erste Endscheibe wenigstens eine zentrale Fluidöffnung in Längsrichtung zum Durchströmen des Fluids aufweisen. Dadurch kann das gefilterte Fluid einfach durch den Fluidauslass beispielsweise in den Fluidtank abfließen.

Gemäß einer günstigen Ausgestaltung des Filterelements kann das wenigstens eine Verbindungselement als Teil einer Rastverbindung ausgebildet sein. Mittels einer Rastverbindung kann das Filterelement mit dem zweiten Gehäuseteil sicher verbunden und auch wieder zerstörungsfrei gelöst werden.

Gemäß einer günstigen Ausgestaltung des Filterelements kann das wenigstens eine Verbindungselement einen sich in Längsrichtung erstreckenden, radial nach außen gerichteten Schnapphaken aufweisen. Auf diese Weise kann das Filterelement sicher mit dem zweiten Gehäuseteil verrastet und auch wieder gelöst werden.

Gemäß einer günstigen Ausgestaltung des Filterelements kann das wenigstens eine Verbindungselement als Teil einer Bajonettverbindung ausgebildet sein. Auch über eine solche Bajonettverbindung kann eine einfache und sichere Verbindung des Filterelements zu dem zweiten Gehäuseteil hergestellt werden, die nach Entnahme von Filterelement und zweitem Gehäuseteil aus dem Filterkopf wieder einfach gelöst werden kann.

Gemäß einer günstigen Ausgestaltung des Filterelements kann das wenigstens eine Verbindungselement mit der ersten Endscheibe einstückig ausgebildet sein. Auf diese Weise kann das Verbindungselement günstig in die erste Endscheibe integriert. Die Herstellung des Filterelements kann sich dadurch vereinfachen.

Gemäß einer günstigen Ausgestaltung des Filterelements kann die erste Endscheibe sich in Längsrichtung erstreckende Führungselemente aufweisen. Insbesondere können dabei zwei Führungselemente jeweils ein Verbindungselement zwischen sich einschließen. Die Führungselemente können das Einsetzen des Filterelements in das zweite Gehäuseteil erleichtern. Außerdem sind dadurch die Verbindungselemente bei der Handhabung des Filterelements geschützt.

Gemäß einer günstigen Ausgestaltung des Filterelements kann die erste Endscheibe einen in Längsrichtung sich von der ersten Endscheibe weg erstreckenden Bund aufweisen, wobei das wenigstens eine Verbindungselement an dem Bund angeordnet ist. Insbesondere kann dabei der Bund ein radial außen umlaufendes Dichtelement aufweisen. Auf diese Weise kann das Filterelement sicher mit dem zweiten Gehäuseteil verrastet und auch wieder gelöst werden. Außerdem kann eine zuverlässige Abdichtung zwischen Filterelementinnenraum und Auslassstutzen gewährleistet werden.

Nach einem weiteren Aspekt der Erfindung wird ein Filtersystem für ein Fluid, insbesondere für eine Flüssigkeit, insbesondere Öl oder Kraftstoff, mit einem Gehäuse mit einem Fluideinlass und einem Fluidauslass und einem in dem Gehäuse angeordneten Filterelement vorgeschlagen, wobei das Gehäuse wenigstens ein erstes Gehäuseteil, ein zweites Gehäuseteil und einen Filterkopf umfasst, wobei das erste Gehäuseteil mit dem Filterkopf verbunden ist und wobei das zweite Gehäuseteil an einem Rücksprung in dem Filterkopf hängend angeordnet ist. Dabei umfasst das Filterelement einen Filtermediumkörper, welcher wenigstens an einer ersten Stirnseite eine erste Endscheibe aufweist, und wenigstens ein Verbindungselement zum Verbinden des Filterelements mit einem Verbindungsgegenelement des zweiten Gehäuseteils.

Das Gehäuse des Filtersystems umfasst den Filterkopf, ein erstes Gehäuseteil und ein zweites Gehäuseteil mit einem darin enthaltenen Filterelement. Das erste Gehäuseteil ist in den Filterkopf geschraubt und abgedichtet. Das zweite Gehäuseteil ist an einem Rücksprung des Filterkopfs eingehängt. Das Gehäuse kann über das erste Gehäuseteil geöffnet werden.

Eine erste, untere, Endscheibe des Filterelements ist mit einem Fluidauslass des zweiten Gehäuseteils dicht verbunden. Der Fluidauslass des zweiten Gehäuseteils führt direkt in einen Fluidtank.

Das Filterelement ist dabei über wenigstens ein Verbindungselement und ein Verbindungsgegenelement mit dem zweiten Gehäuseteil sicher verbunden. Das Verbindungselement kann beispielsweise an der ersten Endscheibe angeordnet sein, während das Verbindungsgegenelement an einem Auslassstutzen des zweiten Gehäuseteils angeordnet sein kann. Das gefilterte Fluid kann so durch eine zentrale Öffnung der Endscheibe direkt in den Auslassstutzen des Fluidauslasses fließen.

Das Filterelement kann insbesondere als hohlzylinderförmiges Rundfilter ausgebildet sein, welches von einer radialen Außenseite auf eine Innenseite von dem Fluid durchströmt wird.

Vorteilhaft können auch andere geometrische Formen eines Filterelements eingesetzt werden.

Bei einem Tausch des Filterelements kann das zweite Gehäuseteil zusammen mit dem Filterelement aus dem Filterkopf entnommen werden. Dabei verbleibt eventuell zwischen Filterelement und Gehäusewand verbliebenes Rohfluid in dem zweiten Gehäuseteil. Danach kann das Filterelement durch Lösen von Verbindungselement und Verbindungsgegenelement aus dem zweiten Gehäuseteil entnommen werden.

Vorteilhaft kann auf diese Weise eine Wartung des Filtersystems einfacher durchgeführt werden. Das im zweiten Gehäuseteil verbliebene Rohfluid auf der Außenseite des Filtermediumkörpers gelangt nicht in den Fluidtank, wenn das Filterelement getauscht wird.

Gemäß einer günstigen Ausgestaltung des Filtersystems können das wenigstens eine Verbindungselement und das wenigstens eine Verbindungsgegenelement als Teil einer Rastverbindung ausgebildet sein. Mittels einer Rastverbindung kann das Filterelement mit dem zweiten Gehäuseteil sicher verbunden und auch wieder zerstörungsfrei gelöst werden.

Gemäß einer günstigen Ausgestaltung des Filtersystems kann das wenigstens eine Verbindungselement einen sich in Längsrichtung erstreckenden, radial nach außen gerichteten Schnapphaken aufweisen und das Verbindungsgegenelement des zweiten Gehäuseteils als nach radial innen gerichteter umlaufender Vorsprung ausgebildet sein. Alternativ kann das wenigstens eine Verbindungselement als nach radial innen gerichteter umlaufender Vorsprung ausgebildet sein und das wenigstens eine Verbindungsgegenelement des zweiten Gehäuseteils wenigstens einen sich in Längsrichtung erstreckenden, radial nach außen gerichteten Schnapphaken aufweisen. Auf diese Weise kann das Filterelement sicher mit dem zweiten Gehäuseteil verrastet und auch wieder gelöst werden.

Gemäß einer günstigen Ausgestaltung des Filtersystems kann das wenigstens eine Verbindungselement und das wenigstens eine Verbindungsgegenelement als Teil einer Bajonettverbindung ausgebildet sein. Auch über eine solche Bajonettverbindung kann eine einfache und sichere Verbindung des Filterelements zu dem zweiten Gehäuseteil hergestellt werden, die nach Entnahme von Filterelement und zweitem Gehäuseteil aus dem Filterkopf wieder einfach gelöst werden kann.

Gemäß einer günstigen Ausgestaltung des Filtersystems kann die erste Endscheibe des Filterelements einen in Längsrichtung sich von der ersten Endscheibe weg erstreckenden Bund aufweisen, wobei das wenigstens eine Verbindungselement an dem Bund angeordnet ist. Dabei kann das zweite Gehäuseteil einen sich in Längsrichtung in einen Innenraum des zweiten Gehäuseteils erstreckenden Auslassstutzen aufweisen, wobei das Verbindungsgegenelement an dem Auslassstutzen angeordnet ist, und der Auslassstutzen zur Aufnahme des Bunds bei bestimmungsgemäßer Montage des Filterelements in dem zweiten Gehäuseteil ausgebildet ist. Insbesondere kann dabei der Bund ein radial außen umlaufendes Dichtelement aufweisen. Auf diese Weise kann das Filterelement sicher mit dem zweiten Gehäuseteil verrastet und auch wieder gelöst werden. Außerdem kann eine zuverlässige Abdichtung zwischen Filterelementinnenraum und Auslassstutzen gewährleistet werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Figur 1: eine isometrische Darstellung eines Filtersystems für ein Fluid, insbesondere für eine Flüssigkeit, insbesondere Öl oder Kraftstoff, mit einem Filterelement nach einem Ausführungsbeispiel der Erfindung;
- Figur 2: eine Explosionsdarstellung des Filtersystems nach Fig. 1;
- Figur 3: eine Explosionsdarstellung des an einem Tankdeckel eines Fluidtanks montierten Filtersystems;
- Figur 4: einen Längsschnitt durch das Filtersystem nach Fig. 1;
- Figur 5: ein Detail B des Filtersystems nach Fig. 4; und
- Figur 6: eine isometrische Ansicht einer ersten Stirnseite des Filterelements.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

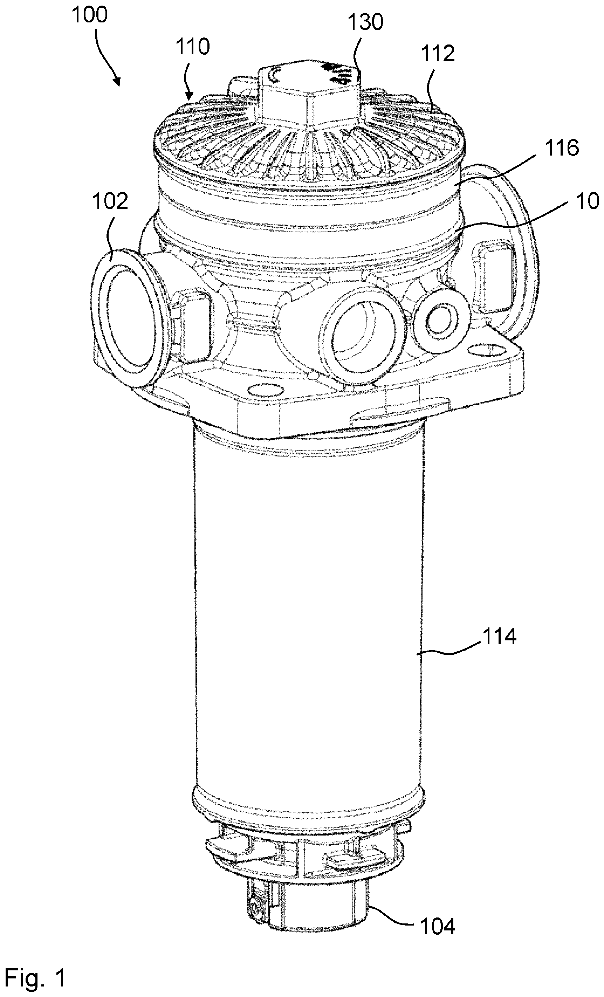

Zur Erläuterung der Erfindung zeigt Figur 1 eine isometrische Darstellung eines Filtersystems 100 für ein Fluid, insbesondere für eine Flüssigkeit, insbesondere Öl oder Kraftstoff, mit einem Filterelement 10 nach einem Ausführungsbeispiel der Erfindung.

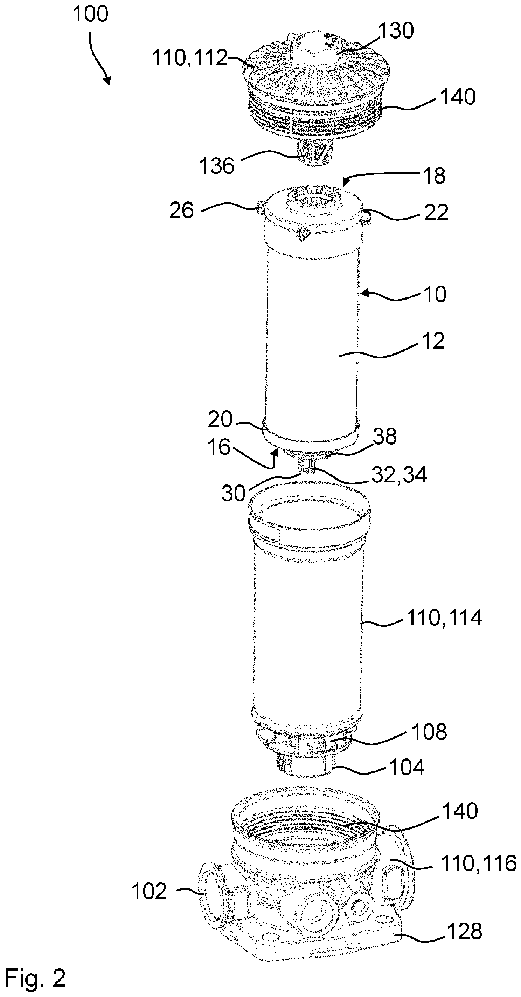

Figur 2 zeigt eine Explosionsdarstellung des Filtersystems 100 nach Figur 1.

Das Filtersystem 100 weist ein Gehäuse 110 mit einem Fluideinlass 102 und einem Fluidauslass 104 und einem in dem Gehäuse 110 angeordneten Filterelement 10 auf.

Das Gehäuse 110 umfasst ein erstes Gehäuseteil 112, ein zweites Gehäuseteil 114 und einen Filterkopf 116. Das erste Gehäuseteil 112 ist mit dem Filterkopf 116 verbunden, insbesondere über ein Schraubgewinde 140 verschraubt. Das zweite Gehäuseteil 114 ist durch den Filterkopf 116 durchgeführt und mit diesem dicht verbunden. Dazu ist das zweite Gehäuseteil 114 an einem Rücksprung 118 in dem Filterkopf 116 hängend angeordnet.

Das erste Gehäuseteil 112 weist einen Werkzeugansatz 130 in Form eines Sechskants zum leichteren Öffnen des Gehäuses 110 durch Drehen des ersten Gehäuseteils 112 gegen den Filterkopf 116 auf.

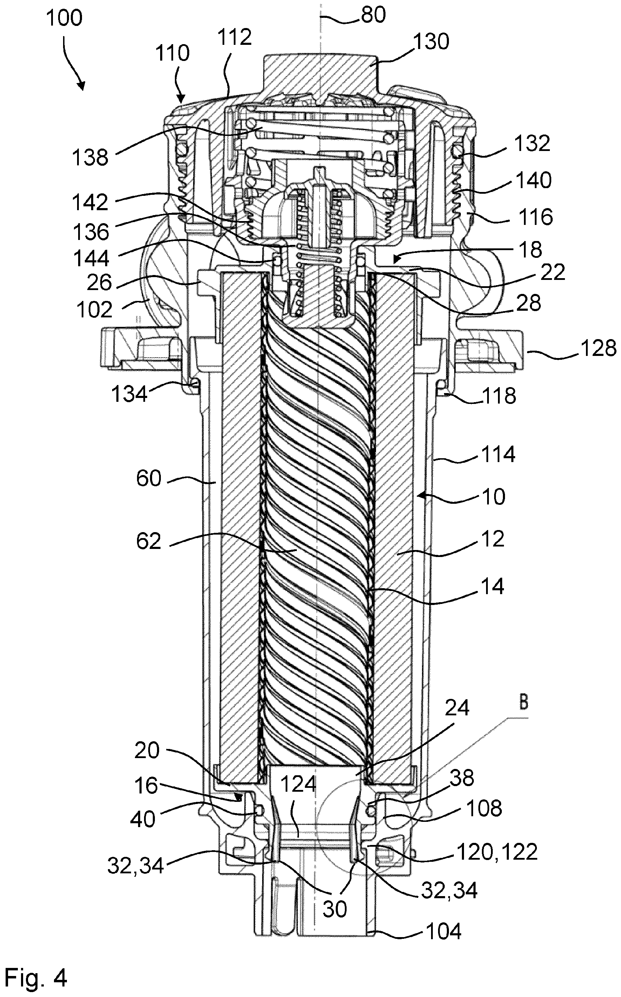

Ein hohlzylinderförmiges Filterelement 10 ist in dem zweiten Gehäuseteil 114 angeordnet. Das Filterelement 10 umfasst einen Filtermediumkörper 12, welcher wenigstens an einer ersten Stirnseite 16 eine erste Endscheibe 20 aufweist, und zwei Verbindungselemente 32 zum Verbinden des Filterelements 10 mit einem Verbindungsgegenelement 120 des zweiten Gehäuseteils 114 (siehe Figur 4).

Wie in Figur 2 erkennbar, weist das Filterelement 10 an seiner zweiten Endscheibe 22 radial nach außen abstehende Montageelemente 26 zur verwechslungssicheren Montage in dem zweiten Gehäuseteil 114 auf.

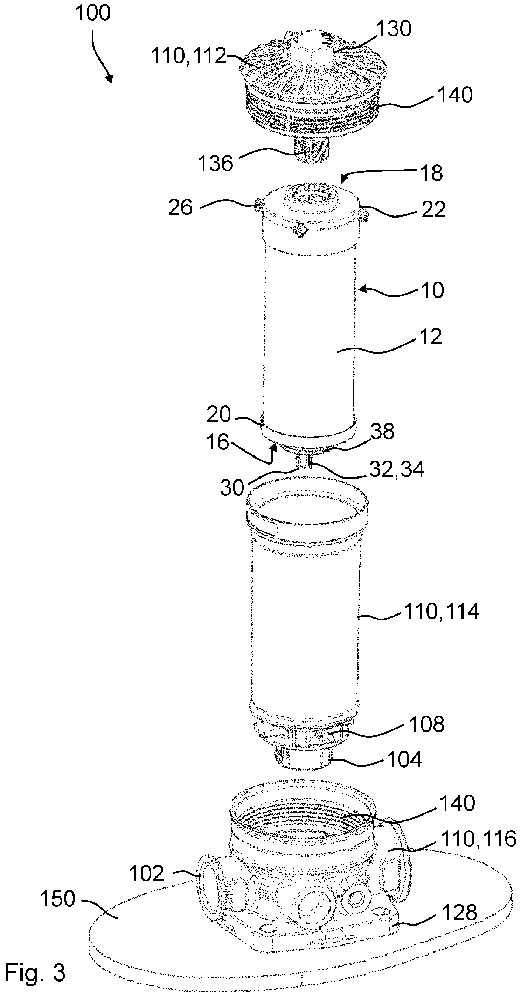

In Figur 3 ist die Explosionsdarstellung des Filtersystems 100 mit dem an einem Tankdeckel 150 oder einer Außenwand eines Fluidtanks montierten Filterkopf 116 dargestellt.

Bei dem an einem Fluidtank montierten Filtersystem 100 ragt das zweite Gehäuseteil 114 durch den Filterkopf 116 hindurch in das Innere des Fluidtanks. Das gefilterte Fluid kann so einfach in den Fluidtank abfließen. Der Filterkopf 116 ist mit seiner Montagevorrichtung 128 an dem Tankdeckel 150 montiert. Der Filterkopf 116 ist mit seiner Montagevorrichtung 128 in einer alternativen, nicht dargestellten, Ausführungsform an einer Außenwand eines Fluidtanks montiert.

Figur 4 zeigt einen Längsschnitt durch das Filtersystem 100 nach Figur 1 mit eingesetztem Filterelement 10.

Das Filterelement 10 umfasst den hohlzylinderförmig ausgebildeten Filtermediumkörper 12, welcher von radial außen nach innen von dem Fluid durchströmt wird. Der Filtermediumkörper 12 ist auf seiner Innenseite durch ein Stützrohr 14 gegen den hydraulischen Druck des strömenden Fluids abgestützt. Das Stützrohr 14 ist in dem Ausführungsbeispiel spiralförmig mit Durchlässen ausgebildet.

Das Filterelement 10 weist an einer ersten Stirnseite 16 eine erste Endscheibe 20 und an einer zweiten Stirnseite 18 eine zweite Endscheibe 22 auf.

Die erste Endscheibe 20 weist eine zentrale Fluidöffnung 24 in Längsrichtung 80 zum Durchströmen des gefilterten Fluids auf.

An der ersten Endscheibe 20 sind zwei Verbindungelemente 32 zum Verbinden des Filterelements 10 mit einem Verbindungsgegenelement 120 des zweiten Gehäuseteils 114 angeordnet. Die zwei Verbindungselemente 32 erstrecken sich von der ersten Endscheibe 20 in einer Längsrichtung 80 weg. Die Verbindungselemente 32 sind mit der ersten Endscheibe 20 einstückig ausgebildet.

Das zweite Gehäuseteil 114 weist einen sich in Längsrichtung 80 in einen Innenraum 124 des zweiten Gehäuseteils erstreckenden Auslassstutzen 108 auf. Dabei ist das Verbindungsgegenelement 120 an dem Auslassstutzen 108 angeordnet, und der Auslassstutzen 108 zur Aufnahme des Bunds 38 bei bestimmungsgemäßer Montage des Filterelements 10 in dem zweiten Gehäuseteil 114 ausgebildet.

Die erste Endscheibe 20 des Filterelements 10 weist einen sich in Längsrichtung 80 von der ersten Endscheibe 20 weg erstreckenden Bund 38 auf. Die Verbindungselemente 32 sind dabei an dem Bund 38 angeordnet. Der Bund 38 weist ein radial außen umlaufendes Dichtelement 40, beispielsweise einen O-Ring, zur Abdichtung gegen den Auslassstutzen 108 auf.

Die Verbindungselemente 32 sind als Teil einer Rastverbindung 30 ausgebildet und weisen sich in Längsrichtung 80 erstreckende, radial nach außen gerichtete Schnapphaken 34 auf. Den anderen Teil der Rastverbindung 30 bildet das an dem Auslassstutzen 108 des zweiten Gehäuseteils 114 angeordnete Verbindungsgegenelement 120, das als nach radial innen gerichteter umlaufender Vorsprung 122 ausgebildet ist.

Alternativ könnten auch das wenigstens eine Verbindungselement 32 als nach radial innen gerichteter umlaufender Vorsprung 122 ausgebildet sein und das wenigstens eine Verbindungsgegenelement 120 des zweiten Gehäuseteils 114 wenigstens einen sich in Längsrichtung 80 erstreckenden, radial nach außen gerichteten Schnapphaken 34 aufweisen.

In einer weiteren, nicht dargestellten, Ausführung könnten auch das wenigstens eine Verbindungselement 32 und das wenigstens eine Verbindungsgegenelement 120 als Teil einer Bajonettverbindung ausgebildet sein.

Das zweite Gehäuseteil 114 mit dem darin befindlichen Filterelement 10 ist an dem Rücksprung 118 des Filterkopfs 116 hängend angeordnet. Dabei ist ein umlaufendes Dichtelement 134, beispielsweise ein O-Ring, zur Abdichtung zwischen einer inneren Wand des Filterkopfs 116 und dem zweiten Gehäuseteil 114 eingelegt.

Das erste Gehäuseteil 112 ist mittels des Schraubgewindes 140 mit dem Filterkopf 116 verbunden, wobei zur Abdichtung ein umlaufendes Dichtelement 132, beispielsweise ein O-Ring, zwischen Filterkopf 116 und erstem Gehäuseteil 112 angeordnet ist.

Die zweite Endscheibe 22 weist eine zentrale Öffnung 28 zur Aufnahme eines Überdruckventils 136 auf. Das Überdruckventil 136 weist zwei Teile auf, welche mit einem Schraubgewinde 142 verschraubt sind. Das Überdruckventil 136 ist in die zentrale Öffnung 28 der zweiten Endscheibe 22 eingeschoben und mittels eines umlaufenden Dichtelements 144, beispielsweise einem O-Ring, gegen die Endscheibe 22 abgedichtet. Das Überdruckventil 136 wird bei der Verschraubung des ersten Gehäuseteils 112 auf den Filterkopf 116 mittels eines Federelements 138 vorgespannt, so dass es sicher in der Öffnung 28 der zweiten Endscheibe 22 angeordnet ist.

Während einer Wartung, wenn das Gehäuse 110 durch das erste Gehäuseteil 112 geöffnet ist, kann das Filterelement 10 entnommen werden. Da das Filterelement 10 mit dem zweiten Gehäuseteil 114 verrastet ist, wird dabei mit dem Filterelement 10 das zweite Gehäuseteil 114 aus dem Filterkopf 116 herausgezogen. Dabei bleibt zwischen zweitem Gehäuseteil 114 und Filterelement 10 noch enthaltenes Rohfluid in dem zweiten Gehäuseteil 114. Wenn beide Teile herausgezogen sind, kann das Filterelement 10 von dem zweiten Gehäuseteil 114 gelöst werden, wobei das restliche Rohfluid entsorgt werden kann. Ein neues Filterelement 10 kann in das zweite Gehäuseteil 114 eingesetzt werden und mit dem zweiten Gehäuseteil 114 wieder in den Filterkopf 116 eingeführt werden.

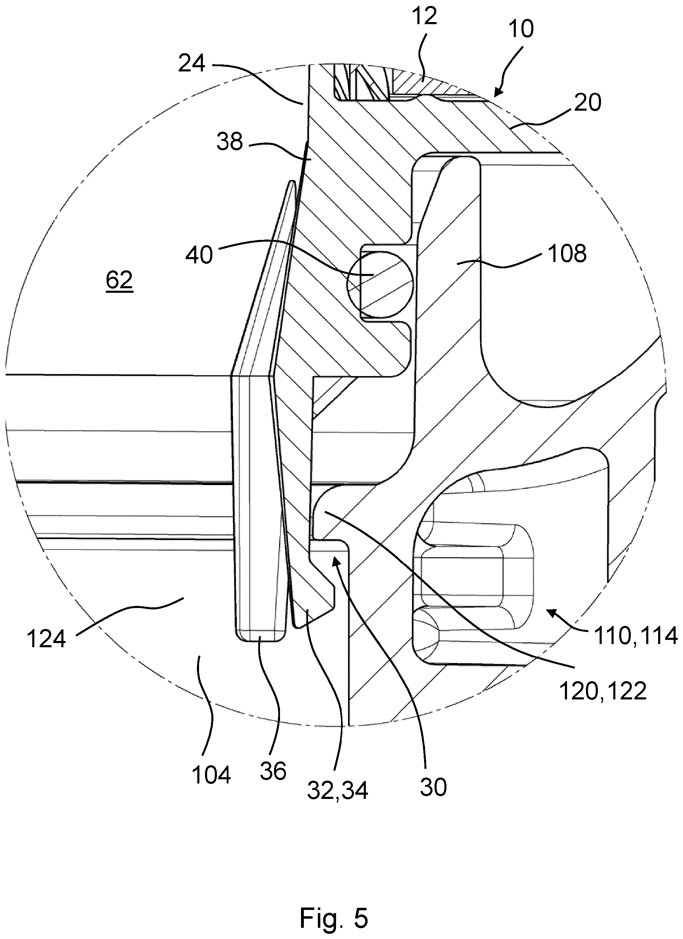

In Figur 5 ist ein Detail B des Filtersystems 100 nach Figur 4 dargestellt.

Dabei sind ein Teil der ersten Endscheibe 20 des Filterelements 10 mit dem sich in Längsrichtung 80 von der ersten Endscheibe 20 weg erstreckenden Bund 38 zu erkennen, an welchem ein als Rastelement 34 ausgebildetes Verbindungselement 32 angeordnet ist. Das Rastelement 34 ist mit dem Vorsprung 122 des Verbindungsgegenelement 120 verrastet, welches Teil des Auslassstutzens 108 ist. Zwischen Bund 38 und dem Auslassstutzen 108 ist das Dichtelement 40 angeordnet, welches die Abdichtung zwischen dem Filterelement 10 und dem zweiten Gehäuseteil 114 gewährleistet, so dass Reinfluidbereich 62 und Rohfluidbereich 60 getrennt sind.

Neben dem Rastelement 34 ist ein Führungselement 36 erkennbar.

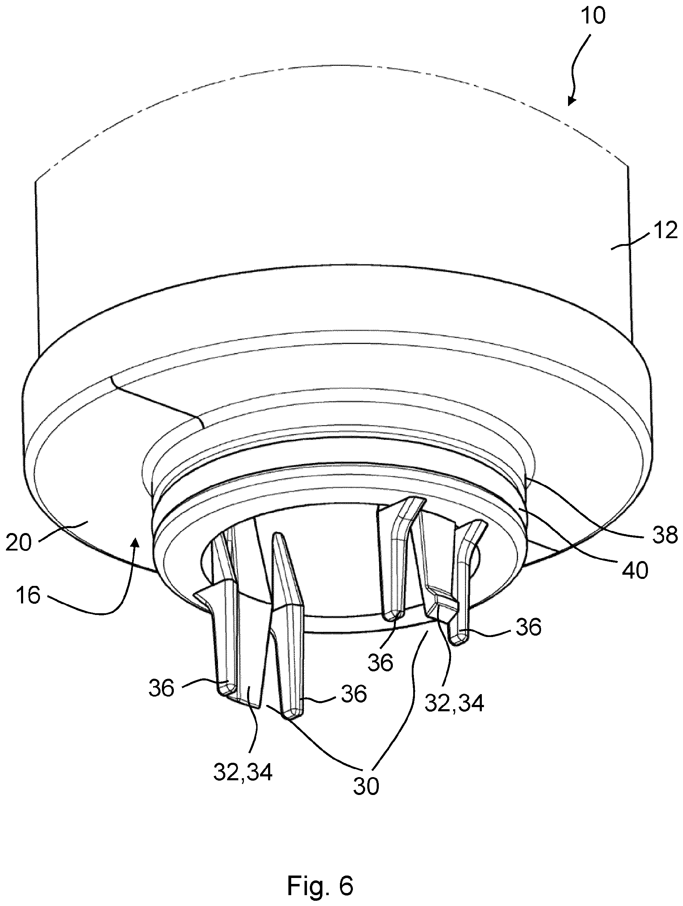

Figur 6 zeigt eine isometrische Ansicht einer ersten Stirnseite 16 des Filterelements 10.

Der Filtermediumkörper 12 des Filterelements 10 ist an der ersten Stirnseite 16 mit der ersten Endscheibe 20 abgeschlossen. Die erste Endscheibe 20 weist den sich in Längsrichtung 80 von der ersten Endscheibe 20 weg erstreckenden Bund 38 auf. An einer Innenseite des Bunds 38 sind zwei sich radial gegenüber liegende Verbindungselemente 32 angeordnet, welche als nach radial außen weisende Rastelemente 34 in Form von Schnapphaken ausgebildet sind.

Weiter weist die erste Endscheibe 20 sich in Längsrichtung 80 erstreckende Führungselemente 36 auf. Dabei schließen jeweils zwei Führungselemente 36 ein Verbindungselement 32 zwischen sich ein. Die Führungselemente 36 können das Einsetzen des Filterelements 10 in das zweite Gehäuseteil 114 erleichtern. Außerdem sind dadurch die Verbindungselemente 32 bei der Handhabung des Filterelements 10 geschützt.

Der Bund 38 weist weiter ein radial außen umlaufendes Dichtelement 40, beispielsweise einen O-Ring, zur Abdichtung gegen den Auslassstutzen 108 des zweiten Gehäuseteils 114 auf.

### Bezugszeichen

- 10: Filterelement
- 12: Filtermediumkörper
- 14: Stützrohr
- 16: erste Stirnseite
- 18: zweite Stirnseite
- 20: erste Endscheibe
- 22: zweite Endscheibe
- 24: Fluidöffnung
- 26: Montageelement
- 28: zentrale Öffnung
- 30: Rastverbindung
- 32: Verbindungselement
- 34: Rastelement
- 36: Führungselement
- 38: Bund
- 40: Dichtelement
- 60: Rohfluidbereich
- 62: Reinfluidbereich
- 80: Längsrichtung
- 100: Filtersystem
- 102: Fluideinlass
- 104: Fluidauslass
- 108: Auslassstutzen
- 110: Gehäuse
- 112: erstes Gehäuseteil
- 114: zweites Gehäuseteil
- 116: Filterkopf
- 118: Rücksprung
- 120: Verbindungsgegenelement
- 122: Vorsprung
- 124: Innenraum
- 128: Montagevorrichtung
- 130: Werkzeugansatz
- 132: Dichtelement
- 134: Dichtelement
- 136: Überdruckventil
- 138: Federelement
- 140: Schraubgewinde
- 142: Schraubgewinde
- 144: Dichtelement
- 150: Tankdeckel

## Patentansprüche

1. Filterelement (10) für ein Fluid, insbesondere für eine Flüssigkeit, insbesondere Öl oder Kraftstoff, zum Einbau in ein Gehäuse (110) eines Filtersystems (100) mit wenigstens einem ersten Gehäuseteil (112), einem zweiten Gehäuseteil (114), und einem Filterkopf (116), wenigstens umfassend
einen Filtermediumkörper (12), welcher wenigstens an einer ersten Stirnseite (16) eine erste Endscheibe (20) aufweist, und
wenigstens ein Verbindungelement (32) zum Verbinden des Filterelements (10) mit wenigstens einem Verbindungsgegenelement (120) des zweiten Gehäuseteils (114) aufweist,
wobei das wenigstens eine Verbindungselement (32) an der ersten Endscheibe (20) angeordnet ist und sich von der ersten Endscheibe (20) in einer Längsrichtung (80) weg erstreckt.

2. Filterelement nach Anspruch 1, wobei die erste Endscheibe (20) wenigstens eine zentrale Fluidöffnung (24) in Längsrichtung (80) zum Durchströmen des Fluids aufweist.

3. Filterelement nach einem der vorhergehenden Ansprüche, wobei das wenigstens eine Verbindungselement (32) als Teil einer Rastverbindung (30) ausgebildet ist.

4. Filterelement nach Anspruch 3, wobei das wenigstens eine Verbindungselement (32) einen sich in Längsrichtung (80) erstreckenden, radial nach außen gerichteten Schnapphaken (34) aufweist.

5. Filterelement nach Anspruch 1 oder 2, wobei das wenigstens eine Verbindungselement (32) als Teil einer Bajonettverbindung ausgebildet ist.

6. Filterelement nach einem der vorhergehenden Ansprüche, wobei das wenigstens eine Verbindungselement (32) mit der ersten Endscheibe (20) einstückig ausgebildet ist.

7. Filterelement nach einem der vorhergehenden Ansprüche, wobei die erste Endscheibe (20) sich in Längsrichtung (80) erstreckende Führungselemente (36) aufweist, insbesondere wobei zwei Führungselemente (36) jeweils ein Verbindungselement (32) zwischen sich einschließen.

8. Filterelement nach einem der vorhergehenden Ansprüche, wobei die erste Endscheibe (20) einen sich in Längsrichtung (80) von der ersten Endscheibe (20) weg erstreckenden Bund (38) aufweist, wobei das wenigstens eine Verbindungselement (32) an dem Bund (38) angeordnet ist,
insbesondere wobei der Bund (38) ein radial außen umlaufendes Dichtelement (40) aufweist.

9. Filtersystem (100) für ein Fluid, insbesondere für eine Flüssigkeit, insbesondere Öl oder Kraftstoff, mit einem Gehäuse (110) mit einem Fluideinlass (102) und einem Fluidauslass (104) und einem in dem Gehäuse (110) angeordneten Filterelement (10) nach einem der vorhergehenden Ansprüche.

10. Filtersystem nach Anspruch 9, wobei das wenigstens eine Verbindungselement (32) und das wenigstens eine Verbindungsgegenelement (120) als Teil einer Rastverbindung (30) ausgebildet sind.

11. Filtersystem nach Anspruch 10, wobei das wenigstens eine Verbindungselement (32) einen sich in Längsrichtung (80) erstreckenden, radial nach außen gerichteten Schnapphaken (34) aufweist und das Verbindungsgegenelement (120) des zweiten Gehäuseteils (114) als nach radial innen gerichteter umlaufender Vorsprung (122) ausgebildet ist.

12. Filtersystem nach einem der Ansprüche 9-11, wobei das wenigstens eine Verbindungselement (32) und das wenigstens eine Verbindungsgegenelement (120) als Teil einer Bajonettverbindung ausgebildet sind.

13. Filtersystem nach einem der Ansprüche 9 bis 12, wobei die erste Endscheibe (20) des Filterelements (10) einen sich in Längsrichtung (80) von der ersten Endscheibe (20) weg erstreckenden Bund (38) aufweist, wobei das wenigstens eine Verbindungselement (32) an dem Bund (38) angeordnet ist,
wobei das zweite Gehäuseteil (114) einen sich in Längsrichtung (80) in einen Innenraum (124) erstreckenden Auslassstutzen (108) aufweist, wobei das Verbindungsgegenelement (120) an dem Auslassstutzen (108) angeordnet ist, und der Auslassstutzen (108) zur Aufnahme des Bunds (38) bei bestimmungsgemäßer Montage des Filterelements (10) in dem zweiten Gehäuseteil (114) ausgebildet ist, insbesondere wobei der Bund (38) ein radial außen umlaufendes Dichtelement (40) aufweist.

14. Filtersystem (100) für ein Fluid, insbesondere für eine Flüssigkeit, insbesondere Öl oder Kraftstoff, wobei das Filtersystem ein Gehäuse (110) mit einem Fluideinlass (102) und einem Fluidauslass (104), sowie einem in dem Gehäuse (110) angeordneten Filterelement (10) umfasst, wobei das Filterelement (10) mindestens umfasst: ein Filtermedium (12), das zumindest an einer ersten Stirnseite (16) eine erste Stirnplatte (20) aufweist, sowie mindestens ein Verbindungselement (32) zum Verbinden des Filterelementes (10) mit mindestens einem Verbindungsgegenelement (120) des zweiten Gehäuseteils (114), wobei das mindestens eine Verbindungselement (32) an der ersten Endplatte (20) angeordnet ist.
